# EUROPÄISCHE PATENTSCHRIFT

(11) **EP 2 307 806 B1**
(45) Veröffentlichungstag und Bekanntmachung des Hinweises auf die Patenterteilung: **04.09.2013**
(21) Anmeldenummer: 10711178.3
(22) Anmeldetag: 11.03.2010
(51) Int. Cl.: F23R 3/28, F23R 3/36, F23L 7/00, F23D 14/78

(54) **BRENNERANORDNUNG FÜR FLUIDISCHE BRENNSTOFFE UND VERFAHREN ZUM HERSTELLEN DER BRENNERANORDNUNG**
BURNER ASSEMBLY FOR FLUID FUELS AND METHOD FOR PRODUCING A BURNER ASSEMBLY
AGENCEMENT DE BRÛLEUR POUR COMBUSTIBLES LIQUIDES ET PROCÉDÉ DE FABRICATION D'UN AGENCEMENT DE BRÛLEUR

(30) Priorität: 17.03.2009 EP 09155354
(43) Veröffentlichungstag der Anmeldung: 13.04.2011
(73) Patentinhaber: Siemens Aktiengesellschaft, 80333 München (DE)
(72) Erfinder: BÖTTCHER, Andreas, 40822 Mettmann (DE); CANO WOLFF, Mariano, 40882 Ratingen (DE); KLUGE, Andre, 48249 Dülmen (DE); KRIEGER, Tobias, 47226 Duisburg (DE); STARING, Sascha, 47169 Duisburg (DE); WÖRZ, Ulrich, Orlando Florida 32765 (US)
(86) Internationale Anmeldenummer: PCT/EP2010/053058
(87) Internationale Veröffentlichungsnummer: WO 2010/105956

(56) Entgegenhaltungen:
- EP-A1- 1 507 119
- EP-A1- 2 026 002
- EP-A2- 1 696 178
- EP-A2- 1 785 672
- US-A- 5 253 810
- US-A1- 2002 160 330
- US-A1- 2002 189 259

## Beschreibung

Die Erfindung betrifft eine Brenneranordnung für eine Feuerungsanlage zum Verfeuern fluidischer Medien und Verfahren zum Herstellen einer Brenneranordnung mit den in den Oberbegriffen jeweiliger unabhängiger Ansprüche genannten Merkmalen.

Im Hinblick auf die weltweiten Bemühungen zur Senkung des Schadstoffausstoßes von Befeuerungsanlagen, insbesondere bei Gasturbinen, wurden in den letzten Jahren Brenner entwickelt, die besonders geringe Ausstöße an Stickoxiden (NOx) aufweisen. Dabei wird vielfach Wert darauf gelegt, dass solche Brenner jeweils nicht nur mit einem Brennstoff, sondern möglichst mit verschiedenen Brennstoffen, beispielsweise Öl, Erdgas und/oder Kohlegas wahlweise oder in Kombination betreibbar sind, um die Versorgungssicherheit und Flexibilität des Betriebs zu erhöhen. Solche Brenner sind beispielsweise in der EP 0 276 696 B1 und in der EP 1 507 119 beschrieben.

Ein Problem bei der Auslegung von Brennern für alle möglichen verschiedenen Betriebsbedingungen und Betriebsstoffe besteht darin, dass die beim Betrieb jeweils benötigten Volumina der einzelnen Betriebsstoffe verschieden sind, sodass es Schwierigkeiten macht, für alle Betriebsstoffe das gleiche Zuführungssystem und die gleichen Eindüsungsöffnungen zu verwenden. Daher ist es im Stand der Technik bekannt, für flüssige und gasförmige Medien verschiedene Zuführungssysteme zu verwenden.

Ein weiteres Problem stellt sich aber auch dann, wenn wahlweise gasförmige Brennstoffe mit völlig verschiedenen spezifischen Brennwerten, beispielsweise Erdgas und Kohlegas, eingesetzt werden sollen. Die verschiedenen relativen Volumenverhältnisse bei Verwendung dieser beiden Brennstoffe und die unterschiedlichen chemischen Vorgänge bei deren Verbrennung erfordern eine Modifizierung oder Erweiterung der bekannten Systeme.

Es ist bekannt, dass zur Reduzierung des Schadstoffausstoßes in bestimmten Betriebszuständen zusätzlich Inertstoffe, insbesondere Wasser oder Wasserdampf eingedüst werden, wodurch die Verbrennungstemperatur gesenkt und folglich der Schadstoffausstoß an NOx verringert wird. Aus der WO 89/08803 Al ist es weiterhin bekannt, dass z. B. bei Verwendung der Schweröle als Brennstoff dem Eingedüsten noch Zusatzstoffe beigemischt werden sollen, um Schäden an den Bauteilen einer nachfolgenden Gasturbine zu vermeiden.

Aus der DE-PS 1 240 706 ist es auch schon für Flugtriebwerke bekannt, den Brennstoff gleichmäßig verteilt durch Öffnungen in Strömungsleitschaufeln einzudüsen, um die Baulänge der nachfolgenden Brennkammer zu verkürzen.

Aus der EP 0 276 696 B1 ist ein Hybridbrenner für Vormischbetrieb mit Gas und/oder Öl bekannt, wie er insbesondere für Gasturbinenanlagen angewendet wird. Der Brenner besteht aus einem zentralen Pilotbrennersystem, welches mit Gas und/oder Öl als ein sogenannter Diffusionsbrenner oder gesonderter Vormischbrenner betreibbar ist. Zusätzlich ist die Möglichkeit zur Einspeisung von Inertstoffen vorgesehen. Das Pilotbrennersystem ist von einem Hauptbrennersystem umgeben, welches ein Luft-Zufuhr-Ringkanalsystem mit einer darin befindlichen Drallbeschaufelung mit einer Mehrzahl von Schaufeln für den Vormischbetrieb mit Gas aufweist. Zusätzlich sind im Hauptbrennersystem Einlassdüsen für Öl im Bereich der Drallbeschaufelung vorhanden, die eine Vormischung des Hauptluftstroms mit Öl ermöglichen.

Aus der DE 38 19 898 Al ist ein weiterer Brenner einer Gasturbine bekannt, bei dem die Drallschaufeln zumindest zum Teil Hohlschaufeln mit Auslassöffnungen an den Schaufelblättern aufweisen, welche mit einem der Zufuhrsysteme für fluidische Medien verbunden sind.

Auch bei derartigen Brennern kann, wie beispielsweise in der EP 0 193 838 B1 beschrieben, die Zugabe eines Inertstoffes, vorzugsweise Wasser oder Wasserdampf, vorgesehen sein. Dadurch wird wie schon erwähnt die Stickoxidbildung im Verbrennungsprozess zusätzlich vermindert.

Den zur vorliegenden Erfindung nächsten Stand der Technik beschreiben die DE 42 12 810 B4 und die aus ihr hervorgegangene EP 0 580 683 B1. Hierbei wird vorausgesetzt, dass bei der Verbrennung von Brenngas mit niedrigem Brennwert keine besonderen Maßnahmen zur Senkung des Schadstoffausstoßes erforderlich sind, da bei Verbrennung solcher Gase keine sehr hohen Flammentemperaturen auftreten und damit die Bildung von NOx praktisch unbedeutend bleibt. Es genügte daher, ein weiteres einfaches Zufuhrsystem zu schaffen, wobei jedoch darauf geachtet werden muss, dass dieses System die anderen Systeme nicht nachteilig beeinflusst und auch nicht bei Betrieb der anderen Systeme die Betriebssicherheit verringert. Deshalb ist es wichtig, dass der weitere Ringkanal zuströmseitig oberhalb der Auslassdüsen für die anderen Brennstoffe mündet. Auf diese Weise kann kein zündfähiges Gemisch in den weiteren Ringkanal gelangen, wenn der Brenner durch die Auslassdüsen mit Brennstoff anderer Art versorgt wird.

Diese bekannten Vorschläge, einen Brenner mit zwei integrierten Gasstufen und einer Ölstufe umzusetzen, sind jedoch praktisch nicht realisierbar geblieben, weil mit ihnen die Festigkeitskriterien nicht zufriedenstellend erfüllt werden konnten. Es sind insbesondere die thermischen und thermisch bedingten Spannungsbelastungen, die so hohe Anforderungen stellen, dass beispielsweise eine aufwendige Zwangskühlung erforderlich wird. Ferner werden die Gehäuse der Brenner gewöhnlich als Gussbauteile aus einem Stück hergestellt, wobei das Gießverfahren bei vielen Kanälen eine enorme Komplexität erreicht.

Die vorliegende Erfindung macht es sich zur Aufgabe, eine Brenneranordnung mit einer Vielzahl für verschiedene Betriebsmedien vorgesehener, voneinander unabhängig steuerbarer Medien-Zufuhrsysteme zu realisieren und hierbei sowohl eine einfache konstruktive Realisierbarkeit als auch Reduzierung thermisch bedingter Spannungen und dadurch eine Erhöhung der Lebensdauer der Brenneranordnung zu erreichen.

Eine erfindungsgemäße Brenneranordnung für eine Verfeuerungsanlage zum Verfeuern fluidischer Medien, Brenn- und/oder Inertstoffe, insbesondere von Heizöl und/oder Heizgas, weist für jede Brennstoffart und/oder Inertstoff wenigstens ein Mediumzufuhrmittel, ein Luftzufuhrmittel und ein als eine feststehende Drallschaufel ausgeführtes Luft-Medium-Vermischungsmittel auf, die in Wandungen eines zusammenhängenden metallischen Brennergehäuses auf eine der bekannten Arten ausgebildet sind.

Die erfindungsgemäßen Aufgaben werden dadurch gelöst, dass wenigstens ein Mediumzufuhrmittel von den an ihn angrenzenden Regionen des Brennergehäuses entlang der jeweiligen trennenden Wandung durch wenigstens einen ausgesparten, als adiabatisch zu bezeichnenden Zwischenraum abgetrennt ist, sodass der Wärmeaustausch zwischen angrenzenden Regionen des Brennergehäuses, insbesondere zwischen den benachbarten Mediumzufuhrmitteln, in den Bereichen der ausgesparten adiabatischen Zwischenräume wesentlich vermindert ist, und dass, da die Herstellung derartiger adiabatischer Zwischenräume in einem einstückigen Gussgehäuse problematisch ist, wenigstens zwei Medienzufuhrmittel als einzelne aneinander angereihte Moduleinheiten ausgebildet werden, die über einen wenigstens einseitigen Kontaktvorsprung vorbestimmter Querschnittsfläche aneinander mithilfe eines Fügemittels gefügt sind, wobei der Kontaktvorsprung wenigstens teilweise den ausgesparten adiabatischen Zwischenraum umschließt. Durch eine derartige Verminderung des Wärmeaustauschs werden weniger stark ausgeprägte thermisch bedingte Spannungen in den Wandungen der Brenneranordnung entstehen. Der erfindungsgemäße modulare Aufbau ermöglicht eine einfachere und preiswertere Herstellung der erfindungsgemäßen Brenneranordnung.

Das Fügemittel zum Zusammenfügen der als einzelne Moduleinheiten ausgeführten Medienzufuhrmittel ist vorzugsweise als eine Verschweißung, eine Verlötung, eine Verschraubung/Vernietung oder ein Presssitz ausgeführt.

Die vorbestimmte Querschnittsfläche des wenigstens einen Kontaktvorsprungs ist vorzugsweise eine derart minimierte Fläche, dass der Wärmeaustausch zwischen den zusammengefügten Moduleinheiten über diese Querschnittsfläche minimal ist, und andererseits, die Kraftübertragung zwischen den einzelnen Modulen der Brenneranordnung eine für den dauerhaften Betrieb ausreichend hohe Festigkeit aufweist. Dadurch werden die metallischen Wärmebrücken zwischen den modular aufgebauten Moduleinheiten verkleinert und die Wärmeübertragung begrenzt.

Ferner ist es von einem besonderen Vorteil, wenn in wenigstens einer Drallschaufel wenigstens ein zusätzliches unabhängiges Medienzufuhrmittel zum Zuführen eines fluidischen Mediums, insbesondere eines Brennstoffes, insbesondere Heizgases, vorgesehen ist. Es ist vorzugsweise in Form eines zweiten zusätzlichen Zufuhrkanals mit entsprechenden Auslassdüsen ausgebildet.

Die erfindungsgemäßen Mittel erlauben, dass die Zufuhr des fluidischen Mediums durch das zusätzliche Medienzufuhrmittel unabhängig steuerbar ist.

Der wenigstens eine ausgesparte adiabatische Zwischenraum ist vorzugsweise mit einem Luftgemisch oder einem Gasgemisch gefüllt und kann mit der Atmosphäre oder dem Innenraum der Brenneranordnung verbunden sein. In einer alternativen Ausgestaltung können die Zwischenräume auch evakuiert sein.

Bei der erfindungsgemäßen Brenneranordnung sind wenigstens die Medienzufuhrmittel im Wesentlichen um eine Längsachse der Brenneranordnung umlaufend und/oder ringförmig und/oder kreissymmetrisch ausgebildet.

Nach einem weiteren Aspekt werden die erfindungsgemäßen Aufgaben durch ein Verfahren zum Herstellen einer Brenneranordnung nach einer der vorhergehend beschriebenen bevorzugten Ausgestaltungen gelöst.

Dies wird insbesondere dadurch erreicht, dass
- wenigstens zwei Medienzufuhrmittel als einzelne Moduleinheiten ausgebildet werden,
- und über wenigstens einen wenigstens einseitigen Kontaktvorsprung vorbestimmter Querschnittsfläche aneinander mithilfe eines Fügemittels kraftschlüssig gefügt werden,
wobei der Kontaktvorsprung wenigstens teilweise den ausgesparten adiabatischen Zwischenraum umschließt.

Gemäß einer weiteren bevorzugten Ausgestaltung des erfindungsgemäßen Herstellverfahrens wird das Zusammenfügen der als einzelne Moduleinheiten ausgeführten Medienzufuhrmittel als eine Verschweißung, eine Verlötung, eine Verschraubung/Vernietung oder ein Presssitz ausgeführt.

Die einzelnen Moduleinheiten werden nach einer bevorzugten Ausgestaltung des Verfahrens vorzugsweise in einem Gießverfahren hergestellt.

Besonders vorteilhaft wird die Herstellung der Brenneranordnung, wenn die einzelnen Moduleinheiten wenigstens teilweise spanabhebend bearbeitet werden, um insbesondere wenigstens einen Vorsprung und/oder ausgesparten adiabatischen Zwischenraum auszubilden. Hierbei kommt zugute, dass die spanabhebenden Verfahren hoch entwickelt und preiswert sind.

Und schließlich wird die adiabatische Wirkung der Zwischenräume weiterhin optimiert, wenn die vorbestimmte Querschnittsfläche des wenigstens einen Kontaktvorsprungs als eine derart minimierte Kontaktfläche ausgeführt wird, dass der Wärmeaustausch zwischen den zusammengefügten Moduleinheiten über diese Querschnittsfläche minimal wird, und andererseits, die Kraftübertragung zwischen den einzelnen Moduleinheiten der Brenneranordnung eine für den dauerhaften Betrieb ausreichend hohe Festigkeit erreicht.

Die Erfindung wird nachfolgend in Ausführungsbeispielen anhand der zugehörigen Zeichnungen erläutert. Es zeigen:
Figur 1 eine aus EP 0 580 683 B1 bekannte Brenneranordnung,
Figur 2 eine Teilquerschnittsansicht durch eine bekannte Brenneranordnung,
Figur 3 eine Prinzipdarstellung einer erfindungsgemäßen Drallschaufel mit zwei integrierten, unabhängig voneinander ansteuerbaren Gasstufen,
Figur 4 eine Querschnittsansicht der erfindungsgemäßen modularen Brenneranordnung vor dem Zusammenfügen, und
Figur 5 eine Querschnittsansicht der erfindungsgemäßen modularen Brenneranordnung.

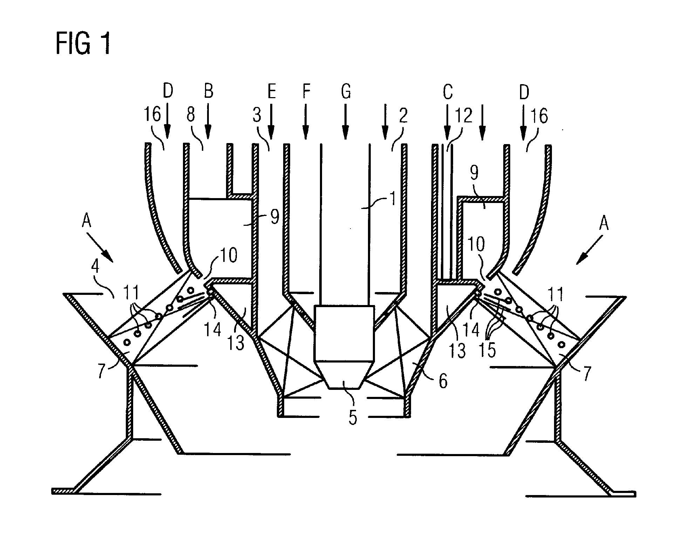

Figur 1 zeigt eine Brenneranordnung 20 nach dem Stand der Technik, die ggf. in Verbindung mit mehreren gleichartigen Anordnungen, beispielsweise in der Brennkammer einer Gasturbinenanlage eingesetzt werden kann.

Sie besteht aus einem inneren Teil, dem Pilotbrennersystem und einem konzentrisch dazu liegenden äußeren Teil, dem Hauptbrennersystem. Beide Systeme sind für einen Betrieb mit gasförmigen und/oder flüssigen Brennstoffen in beliebiger Kombination geeignet. Das Pilotbrennersystem besteht aus einer zentralen Ölzuführung 1 (Medium G) und einem konzentrisch um diesen herum angeordneten inneren Gas-Zufuhrkanal 2 (Medium F). Dieser wiederum ist umgeben von einem konzentrisch um die Achse des Brenners angeordneten inneren Luft-Zufuhrkanal 3 (Medium E).

In oder an diesem Kanal kann ein geeignetes Zündsystem angeordnet sein, für welches viele Ausführungsmöglichkeiten bekannt sind und auf dessen Darstellung hier deshalb verzichtet wurde. Die zentrale Ölzuführung 1 weist an ihrem Ende eine Öldüse 5 auf und der innere Luft-Zufuhrkanal 3 weist in seinem Endbereich eine Drallbeschaufelung 6 auf. Ein Pilotbrennersystem 1, 2, 3, 5, 6 kann in einer an sich bekannten Weise, d. h. überwiegend als ein Diffusionsbrenner betrieben werden. Seine Aufgabe besteht darin, den Hauptbrenner in einem stabilen Brennbertieb aufrecht zu erhalten, da dieser meistens mit einem zu Instabilitäten neigenden Magergemisch betrieben wird.

Das Hauptbrennersystem weist ein konzentrisch zum Pilotbrennersystem angeordnetes und schräg auf dieses zulaufendes äuβeres Luft-Zufuhr-Ringkanalsystem 4 auf. Auch dieses Luft-Zufuhr-Ringkanalsystem 4 ist mit einer Drallbeschaufelung 7 versehen. Die Drallbeschaufelung 7 besteht aus Hohlschaufeln mit Auslassdüsen 11 im Strömungsquerschnitt des Luft-Zufuhr-Ringkanalsystems 4 (Medium A). Diese werden aus einer Zuführungsleitung 8 und einem Ringkanal 9 durch Öffnungen 10 für das Medium B gespeist. Zusätzlich weist der Brenner eine Zuführungsleitung 12 für ein Medium C auf, welche in einen Ringkanal 13 mündet, welcher Auslassdüsen 14 für das Medium C im Bereich oder unterhalb der Drallbeschaufelung 7 aufweist.

Angedeutet dargestellt ist auch ein Sprühstrahl 15 des Mediums C. Erfindungsgemäß weist der Brenner zusätzlich einen weiteren Kohlegas-Zuführkanal 16 für Medium D auf. Dieser mündet knapp oberhalb der Drallbeschaufelung 7 mit den Auslassdüsen 11 in das äußere Luft-Zufuhr-Ringkanalsystem 4 ein, und zwar an dessen Innenseite, sodass beide zusammen im Prinzip einen Diffusionsbrenner bilden. Wichtig ist dabei, dass bei einem Betrieb mit dem Medium B, z. B. Erdgas, keine Rezirkulation dieses Mediums an Kanten oder in den Kohlegas-Zufuhrkanal 16 möglich ist, was die Betriebssicherheit beeinträchtigen könnte. Auch soll der Kohlegas-Zuführkanal 16 nicht die Strömung unterhalb seiner Einmündung stören, sodass die guten Verbrennungseigenschaften für die Medien B und C unverändert erhalten bleiben. Würde der Kohlegas-Zufuhrkanal 16 unterhalb der Auslassdüsen 11 für Medium B oder der Auslassdüsen 14 für Medium C münden, so ergäbe sich an dieser Stelle eine Querschnittserweiterung und eine Störung der Randströmung.

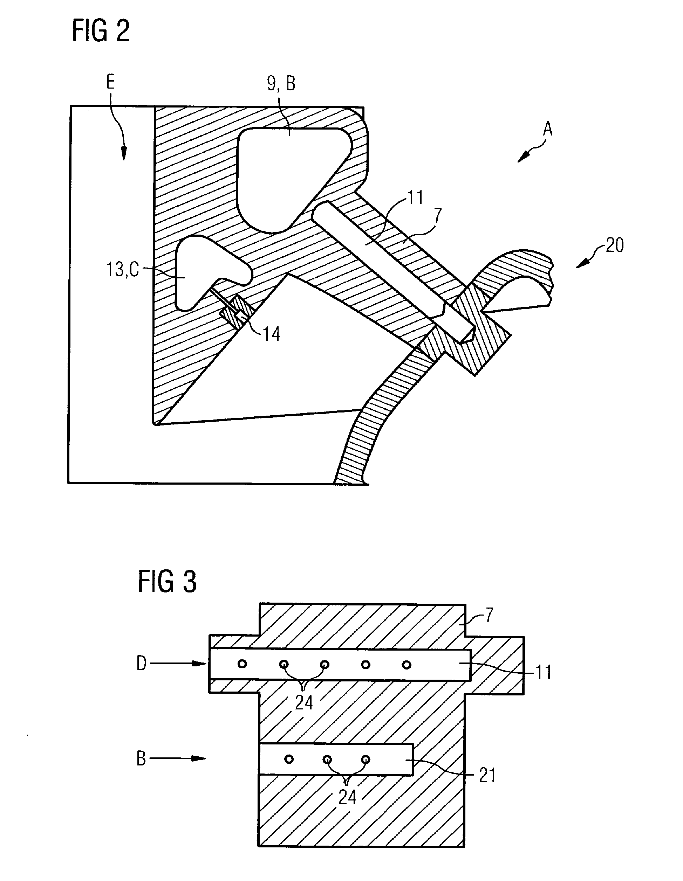

Figur 2 zeigt eine vergrößerte Teilquerschnittsansicht durch eine bekannte Brenneranordnung 20. Die Brenneranordnung ist kreisrund, sodass man den Ringkanal 9 und 13 als kreisumlaufend vorzustellen hat.

So ähnlich kann der Bereich des Hauptbrenners aus Figur 1 realisiert sein. Die Drallschaufeln 7 weisen nur einen Zufuhrkanal mit den Auslassdüsen 11 auf, die vorzugsweise zum Eindüsen eines gasförmigen Mediums B vorgesehen sind. Unterhalb davon in Strömungsrichtung ist eine Auslassdüse 14 zum Eindüsen von vorzugsweise flüssigem Medium C vorgesehen. Es ist eine Vielzahl von Auslassdüsen 14 entlang des kreisumlaufenden Ringkanals 13 angeordnet, sodass die Eindüsung des Mediums C gleichmäßig in den ebenso kreisumlaufenden Brennerraum erfolgen kann.

Diese Darstellung weist in Gegenteil zu der in Figur 1 nur eine Gaszuleitung und eine Ölzuleitung auf und macht es deutlich, dass die Einrichtung einer zusätzlichen Gaszuführung in dem einstückigen Gussgehäuse der Brenneranordnung 20 ein schwieriges technisches Problem darstellt, wie eingangs beschrieben.

Figur 3 zeigt eine Prinzipdarstellung einer erfindungsgemäßen Drallschaufel 7 mit zwei integrierten, unabhängig voneinander ansteuerbaren Gasstufen B und D.

Die Drallschaufel 7 weist erfindungsgemäß zwei voneinander unabhängige Zufuhrkanäle 11 und 21 auf. Der eine Zufuhrkanal mit den Auslassdüsen 11 kann beispielsweise zum Eindüsen des Mediums D und der zweite Zufuhrkanal 21 über die Auslassdüsen 24 zum Eindüsen des Mediums B verwendet werden. Vorzugsweise werden beide durch die Zufuhrkanäle der Drallschaufel 7 einzudüsenden Medien gasförmig sein, z. B. das Eine Erdgas und das Andere Kohlegas. Ebenso kann über diese Auslassdüsen 11 und/oder 21 bei Bedarf ein Inertstoff wie etwa Wasserdampf eingedüst werden.

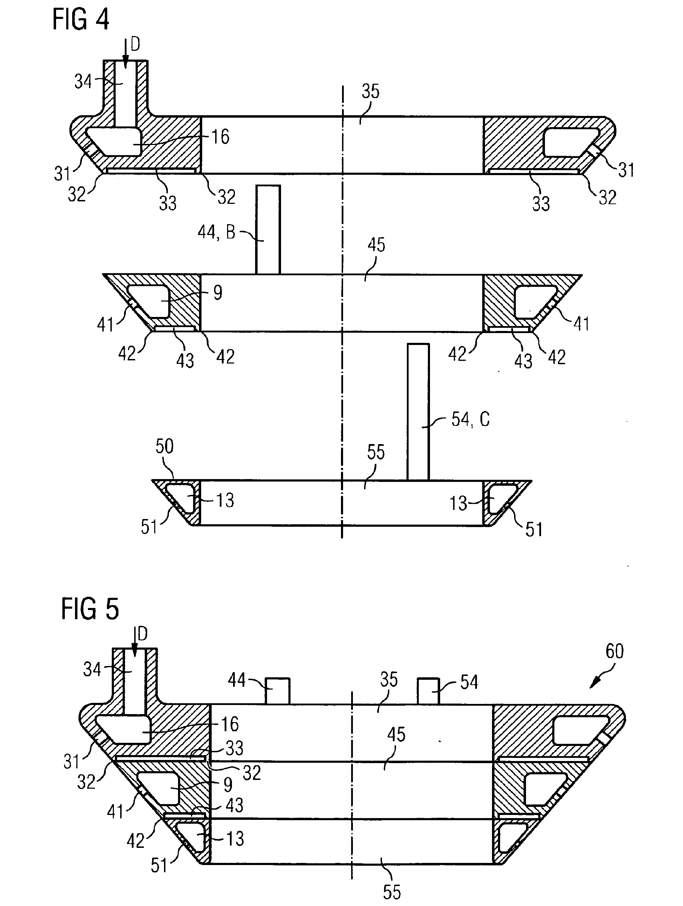

Figur 4 zeigt eine Querschnittsansicht einer erfindungsgemäβen Brenneranordnung 20 mit einer erfindungsgemäß modular aufgebauten Hauptdüseneinheit 60 vor dem Zusammenfügen.

In der dargestellten Ausgestaltung weist die modular aufgebaute Hauptdüseneinheit 60 drei Stufen 30, 40 und 50 auf. In anderen Ausgestaltungen kann eine andere Anzahl von Stufen auf die gleiche erfindungsgemäße Weise zusammengefügt werden.

Jede der Stufen 30, 40, 50 weist einen geneigten Außenrand auf, der vorzugsweise konisch in Richtung der Medienströmung im Brenner verjungend geformt ist. In diesem geneigten Außenrand ist kreisumlaufend jeweils eine Vielzahl von Auslassdüsen 31, 41 und 51 vorgesehen.

Beispielsweise können die zwei stromaufwärts angeordneten Stufen 30 und 40 als zwei Gasstufen und die unterhalb oder stromabwärts angeordnete Stufe 50 als eine Ölstufe verwendet werden. Die zwei Gasstufen 30 und 40 können in einer bevorzugten Ausgestaltung in die feststehenden Drallschaufeln 7 mit zweifachen Kanälen 11, 21 jeweils ein anderes Gasmedium einspeisen oder in einer anderen bevorzugten Ausgestaltung über anders angeordnete Auslassdüsen jeweils ein anderes Gasmedium in die Hauptbrennkammer des Brenners einspeisen.

Die als einzelne Moduleinheiten ausgeführten Stufen 30, 40 und 50 lassen sich erfindungsgemäß vergleichsweise einfach herstellen. Sie können beispielsweise zunächst als ein Gussteil hergestellt und anschließend an wichtigen Betriebsflächen spannabhebend bearbeitet werden.

In einer besonders bevorzugten Ausgestaltung wird beispielsweise mithilfe einer beim Gießen ausgesparten oder durch spannabhebende Bearbeitung geschaffene in der jeweiligen Trennebene zwischen den Modul-Stufen 30, 40 und 50 jeweils eine Vertiefung 33, 43 ausgespart. Hierbei entstehen Kontaktvorsprünge 32 und 42, die vorzugsweise auf der Innenseite und der Außenseite der Modul-Stufen vorgesehen werden und einen als eine Nut ausgebildeten Zwischenraum 33 und 43 bilden.

Jede der ringförmig ausgebildeten Stufen 30, 40, 50 erhält wenigstens einen Anschluss 34, 44, 54, über welchen das entsprechende Betriebsmedium, Gas, Öl oder Inertstoff, zugeführt wird. Die Zuführung der einzelnen Betriebsstoffe kann dadurch unabhängig voneinander erfolgen.

Die Stufen 30, 40 und 50 weisen jeweils einen Innenraum 35, 45 und 55 auf, der zur Aufnahme weiterer Bestandteile der Brenneranordnung 20 vorgesehen ist.

Die modular ausgebildeten Stufen 30, 40 und 50 werden im nächsten Schritt aufeinander aufgesetzt und an den Kontaktvorsprüngen 32 und 42 kraftschlüssig verbunden.

Die kraftschlüssige Verbindung kann beispielsweise durch Verlöten oder Verschweißen ausgeführt werden, wobei auf eine Vielzahl ausgereifter Verfahren zurückgegriffen werden kann. In alternativen Ausgestaltungen kann ferner anstelle einer unlösbaren Verbindung wie Verschweißung eine lösbare Schraubverbindung treten, um eine Demontage der modularen Brennereinheit zu ermöglichen.

Figur 5 zeigt eine Querschnittsansicht der erfindungsgemäßen Brenneranordnung 20 mit einer erfindungsgemäß modular aufgebauten Hauptdüseneinheit 60 aus Figur 4 nach dem Zusammenfügen.

Die kraftschlüssig zusammengefügten Modul-Stufen 30, 40 und 50 weisen einen durchgehenden Innenraum auf, der aus den Innenräumen 35, 45 und 55 der einzelnen Modul-Stufen 30, 40 und 50 zusammengesetzt ist. Der Innenraum 35, 45, 55 dient beispielsweise zur Aufnahme eines Pilotbrenners 1, 2, 3, 5, wie er in Figur 1 dargestellt ist.

In den zusammengefügten Modulstufen bilden die Vertiefungen 33, 34 Zwischenräume, die benachbarte Module thermisch gegeneinander isolieren. Hierzu kann in die Zwischenräume insbesondere auch ein schlecht Wärme leitendes Gas eingebracht sein. Auch eine Evakuierung der Zwischenräume ist denkbar, um konvektive Wärmeleitung zu unterdrücken.

Im Betrieb der erfindungsgemäßen Brenneranordnung kann beispielsweise innerhalb der Hauptdüseneinheit 60 eine stabilisierte Temperaturverteilung erreicht werden, bei der die Moduleinheit 30 etwa 0° C, die ihn nachgeordnete Moduleinheit 40 120° C und die am nächsten zur Flammenfront angeordnete Moduleinheit 50 240 ° C aufweisen.

## Patentansprüche

1. Brenneranordnung (20) für eine Feuerungsanlage zum Verfeuern fluidischer Medien, Brenn- und/oder Inertstoffe, insbesondere von Heizöl und/oder Heizgas, wobei für jede Brennstoffart und/oder Inertstoff wenigstens ein Mediumzufuhrmittel (1, 2, 8, 9, 12, 13, 16), ein Luftzufuhrmittel (3, 4) und ein als eine feststehende Drallschaufel (6, 7) ausgeführtes Luft-Medium-Vermischungsmittel (6, 7) vorgesehen ist, die in Wandungen eines zusammenhängenden metallischen Brennergehäuses ausgebildet sind, wobei wenigstens ein Mediumzufuhrmittel (9, 13, 16) von den an ihn angrenzenden Regionen des Brennergehäuses entlang der jeweiligen trennenden Wandung durch wenigstens einen ausgesparten Zwischenraum (33, 43) abgetrennt ist, sodass der Wärmeaustausch zwischen angrenzenden Regionen des Brennergehäuses, insbesondere zwischen den benachbarten Mediumzufuhrmitteln (9, 13, 16), in den Bereichen der ausgesparten Zwischenräume (33, 43) vermindert ist,
**dadurch gekennzeichnet, dass** wenigstens zwei Medienzufuhrmittel (9, 13, 16) als einzelne aneinander angereihte Moduleinheiten (30, 40, 50) ausgebildet sind, die über einen wenigstens einseitigen Kontaktvorsprung (32, 42) vorbestimmter Querschnittsfläche aneinander mithilfe eines Fügemittels gefügt sind, wobei der Kontaktvorsprung (32, 42) wenigstens teilweise den ausgesparten Zwischenraum (33, 43) umschließt.

2. Brenneranordnung nach Anspruch 1,
**dadurch gekennzeichnet, dass** das Fügemittel zum Zusammenfügen der als einzelne Moduleinheiten (30, 40, 50) ausgeführten Medienzufuhrmittel (9, 13, 16) als eine Verschweißung, eine Verlötung, eine Verschraubung/Vernietung oder ein Presssitz ausgeführt ist.

3. Brenneranordnung nach einem vorhergehenden Anspruch 1 bis 2,
**dadurch gekennzeichnet, dass** die vorbestimmte Querschnittsfläche des wenigstens einen Kontaktvorsprungs (32, 42) eine derart minimierte Fläche ist, dass der Wärmeaustausch zwischen den zusammengefügten Moduleinheiten (30, 40, 50) über diese Querschnittsfläche minimal ist, und andererseits, die Kraftübertragung zwischen den einzelnen Modulen der Brenneranordnung eine für den dauerhaften Betrieb ausreichend hohe Festigkeit aufweist.

4. Brenneranordnung (20) nach einem vorhergehenden Anspruch, **dadurch gekennzeichnet, dass** in wenigstens einer Drallschaufel (7) wenigstens ein zusätzliches unabhängiges Medienzufuhrmittel (21) zum Zuführen eines fluidischen Mediums, insbesondere eines Brennstoffes, insbesondere Heizgases, vorgesehen ist.

5. Brenneranordnung nach Anspruch 4,
**dadurch gekennzeichnet, dass** die Zufuhr des fluidischen Mediums durch das zusätzliche Medienzufuhrmittel (21) unabhängig gesteuert ist.

6. Brenneranordnung nach einem vorhergehenden Anspruch, **dadurch gekennzeichnet, dass** der wenigstens eine ausgesparte Zwischenraum (33, 43) mit einem Luftgemisch oder einem Gasgemisch gefüllt ist.

7. Brenneranordnung nach Anspruch 6,
**dadurch gekennzeichnet, dass** der wenigstens eine ausgesparte Zwischenraum (33, 43) evakuiert ist.

8. Brenneranordnung nach einem vorhergehenden Anspruch, **dadurch gekennzeichnet, dass** wenigstens die Medienzufuhrmittel (1, 2, 8, 9, 12, 13, 16) um eine Längsachse der Brenneranordnung (20) umlaufend und/oder ringförmig und/oder kreissymmetrisch ausgebildet sind.

9. Verfahren zum Herstellen einer Brenneranordnung nach einem der vorhergehenden Ansprüche,
**dadurch gekennzeichnet, dass**
- wenigstens zwei Medienzufuhrmittel (9, 13, 16) als einzelne Moduleinheiten (30, 40, 50) ausgebildet werden,
- und über wenigstens einen wenigstens einseitigen Kontaktvorsprung (32, 42) vorbestimmter Querschnittsfläche aneinander mithilfe eines Fügemittels kraftschlüssig gefügt werden, wobei der Kontaktvorsprung (32, 42) wenigstens teilweise den ausgesparten Zwischenraum (33, 43) umschließt.

10. Verfahren nach Anspruch 9,
**dadurch gekennzeichnet, dass** das Zusammenfügen der als einzelne Moduleinheiten (30, 40, 50) ausgeführten Medienzufuhrmittel (9, 13, 16) als eine Verschweißung, eine Verlötung, eine Verschraubung/Vernietung oder ein Presssitz ausgeführt wird.

11. Verfahren nach Anspruch 9,
**dadurch gekennzeichnet, dass** die einzelnen Moduleinheiten (30, 40, 50) in einem Gießverfahren hergestellt werden.

12. Verfahren nach Anspruch 9,
**dadurch gekennzeichnet, dass** die einzelnen Moduleinheiten (30, 40, 50) wenigstens teilweise spannabhebend bearbeitet werden, um insbesondere wenigstens einen Vorsprung (32, 42) und/oder ausgesparten Zwischenraum (33, 43) auszubilden.

13. Verfahren nach Anspruch 9,
**dadurch gekennzeichnet, dass** die vorbestimmte Querschnittsfläche des wenigstens einen Kontaktvorsprungs (32, 42) als eine derart minimierte Kontaktfläche ausgeführt wird, dass der Wärmeaustausch zwischen den zusammengefügten Moduleinheiten (30, 40, 50) über diese Querschnittsfläche minimal wird, und andererseits, die Kraftübertragung zwischen den einzelnen Moduleinheiten (30, 40, 50) der Brenneranordnung eine für den dauerhaften Betrieb ausreichend hohe Festigkeit erreicht.

## Claims

1. Burner assembly (20) for a firing system for burning fluid media, fuels and/or inert substances, in particular heating oil and/or heating gas, at least one medium supplying means (1, 2, 8, 9, 12, 13, 16), an air supplying means (3, 4) and an air-medium mixing means (6, 7), designed as a fixed swirl blade (6, 7), being provided for each type of fuel and/or inert substance, which means are formed in walls of a contiguous metallic burner housing, at least one medium supplying means (9, 13, 16) being separated from the regions adjacent to it of the burner housing along the respective separating wall by at least one removed intermediate space (33, 43), so that the heat exchange between adjacent regions of the burner housing, in particular between the neighbouring medium supplying means (9, 13, 16), is reduced in the regions of the removed intermediate spaces (33, 43),
**characterized in that** at least two medium supplying means (9, 13, 16) are formed as individual module units (30, 40, 50), which are arranged in series one alongside the other and are joined to one another with the aid of a joining means by way of a contact projection (32, 42) of a predetermined cross-sectional area at least on one side, the contact projection (32, 42) at least partially enclosing the removed intermediate space (33, 43).

2. Burner assembly according to Claim 1, **characterized in that** the joining means for joining together the medium supplying means (9, 13, 16) designed as individual module units (30, 40, 50) is designed as a welding, a soldering/brazing, a screwing/riveting or a press fit.

3. Burner assembly according to one of the preceding Claims 1 or 2, **characterized in that** the predetermined cross-sectional area of the at least one contact projection (32, 42) is an area minimized such that the heat exchange between the joined-together module units (30, 40, 50) by way of this cross-sectional area is minimal, and on the other hand the force transmission between the individual modules of the burner assembly has a sufficiently high strength for sustained operation.

4. Burner assembly (20) according to one of the preceding claims, **characterized in that** at least one additional, independent medium supplying means (21), for supplying a fluid medium, in particular a fuel, in particular heating gas, is provided in at least one swirl blade (7).

5. Burner assembly according to Claim 4, **characterized in that** the supply of fluid medium through the additional medium supplying means (21) is independently controlled.

6. Burner assembly according to a preceding claim, **characterized in that** the at least one removed intermediate space (33, 43) is filled with an air mixture or a gas mixture.

7. Burner assembly according to Claim 6, **characterized in that** the at least one removed intermediate space (33, 43) is evacuated.

8. Burner assembly according to a preceding claim, **characterized in that** at least the medium supplying means (1, 2, 8, 9, 12, 13, 16) take a form in which they run around a longitudinal axis of the burner assembly (20) and/or an annular form and/or a circular-symmetrical form.

9. Method for producing a burner assembly according to one of the preceding claims, **characterized in that**
- at least two medium supplying means (9, 13, 16) are formed as individual module units (30, 40, 50),
- and are joined to one another with frictional engagement with the aid of a joining means by way of at least one contact projection (32, 42) of a predetermined cross-sectional area at least on one side, the contact projection (32, 42) at least partially enclosing the removed intermediate space (33, 43).

10. Method according to Claim 9, **characterized in that** the joining together of the medium supplying means (9, 13, 16) designed as individual module units (30, 40, 50) is performed as a welding, a soldering/brazing, a screwing/riveting or a press fit.

11. Method according to Claim 9, **characterized in that** the individual module units (30, 40, 50) are produced in a casting process.

12. Method according to Claim 9, **characterized in that** the individual module units (30, 40, 50) are at least partially machined, in order in particular to form at least one projection (32, 42) and/or removed intermediate space (33, 43).

13. Method according to Claim 9, **characterized in that** the predetermined cross-sectional area of the at least one contact projection (32, 42) is designed as a contact area minimized such that the heat exchange between the joined-together module units (30, 40, 50) by way of this cross-sectional area becomes minimal, and on the other hand the force transmission between the individual module units (30, 40, 50) of the burner assembly achieves a sufficiently high strength for sustained operation.

## Revendications

1. Agencement ( 20 ) de brûleur pour un système de foyer de combustion de milieux fluides, de matières combustibles et/ou inertes, notamment de fioul et/ou de gaz de chauffage, dans lequel il est prévu, pour chaque type de combustible et/ou de matière inerte, au moins un moyen ( 1, 2, 8, 9, 12, 13, 16 ) d'apport de milieu, un moyen ( 3, 4 ) d'apport d'air et un moyen ( 6, 7 ) de mélange air-milieu réalisé sous la forme d'aubes ( 6, 7 ) fixes en hélice, qui sont constituées dans des parois d'un corps de brûleur métallique d'un seul tenant, au moins un moyen ( 9, 13, 16 ) d'apport de milieu étant séparé des régions qui en sont voisines du corps du brûleur le long de la paroi de séparation respective par au moins un espace ( 33, 43 ) intermédiaire vide de manière à ce que l'échange de chaleur en des régions voisines du corps du brûleur, notamment entre des moyens ( 9, 13, 16 ) voisins d'apport de milieu, soit diminué dans les zones des espaces ( 33, 43 ) intermédiaires vides,
**caractérisé en ce qu'**au moins deux moyens ( 9, 13, 16 ) d'apport de milieu sont constitués sous la forme d'unités ( 30, 40, 50 ) modulaires individuelles, qui sont rangées l'une à côté de l'autre et qui sont ointes l'une à l'autre à l'aide d'un moyen de jonction par l'intermédiaire d'au moins une saillie ( 32, 42 ) unilatérale de contact de surface de section transversale déterminée à l'avance, la saillie ( 32, 42 ) de contact entourant au moins en partie l'espace ( 33, 43 ) intermédiaire vide.

2. Agencement de brûleur suivant la revendication 1, **caractérisé en ce que** le moyen de jonction est réalisé, pour la jonction des moyens ( 9, 13, 16 ) d'apport de milieu réalisés sous la forme d'unité ( 30, 40, 50 ) individuelles modulaires, en tant qu'une soudure , une brasure, un vissage/ rivetage ou un ajustage serré.

3. Agencement de brûleur suivant l'une des revendications précédentes 1 à 2,
**caractérisé en ce que** la surface de section transversale déterminée à l'avance de la au moins une saillie ( 32, 42 ) de contact est une surface minimisée, de manière à ce que l'échange de chaleur entre les unités ( 30, 40, 50 ) modulaires jointes par cette surface de section transversale soit minimum et d'autre part de manière à ce que la transmission de force entre les modules individuels de l'agencement de brûleur ait une solidité suffisamment grande pour le fonctionnement de longue durée.

4. Agencement de brûleur suivant l'une des revendications précédentes,
**caractérisé en ce que** dans au moins une aube ( 7 ) hélicoïdale est prévu au moins un moyen ( 21 ) d'apport de milieu supplémentaire et indépendant pour l'apport d'un milieu fluide, notamment d'un combustible, notamment de gaz de chauffage.

5. Agencement de brûleur suivant la revendication 4, **caractérisé en ce que** l'apport du milieu fluide est réglé indépendamment par le moyen ( 21 ) supplémentaire d'apport de milieu.

6. Agencement de brûleur suivant l'une des revendications précédentes,
**caractérisé en ce que** au moins un espace ( 33, 43 ) intermédiaire vide est rempli d'un mélange d'air ou d'un mélange de gaz.

7. Agencement de brûleur suivant la revendication 6, **caractérisé en ce que** au moins un espace ( 33, 43 ) intermédiaire vide est mis sous vide.

8. Agencement de brûleur suivant l'une des revendications précédentes,
**caractérisé en ce qu'**au moins les moyens ( 1, 2, 8, 9, 12, 13, 16 ) d'apport de milieu sont constitués en faisant le tour autour d'un axe longitudinal de l'agencement ( 20 ) de brûleur et/ou annulairement et/ou suivant une symétrie circulaire.

9. Procédé de fabrication d'un agencement de brûleur suivant l'une des revendications précédentes, **caractérisé en ce que**
- au moins deux moyens ( 9, 13, 16 ) d'apport de milieu sont constitués sous la forme d'unités ( 30, 40, 50 ) individuelles modulaires,
- et sont jointes à coopération de force à l'aide d'un moyen de jonction l'une à l'autre par au moins une saillie ( 32, 42 ) unilatérale de contact, de surface de section transversale déterminée à l'avance, la saillie ( 32, 42 ) de contact entourant au moins en partie l'espace ( 33, 43 ) intermédiaire vide.

10. Procédé de fabrication d'un agencement de brûleur suivant la revendication 9,
**caractérisé en ce que** la jonction, des moyens ( 9, 13, 16 ) d'apport de milieu réalisés sous la forme d'unités ( 30, 40, 50 ) individuelles modulaires, s'effectue par une soudure, une brasure, un vissage/rivetage ou un ajustage serré.

11. Procédé de fabrication d'un agencement de brûleur suivant la revendication 9,
**caractérisé en ce que** l'on fabrique les diverses unités ( 30, 40, 50 ) modulaires par un procédé de coulée.

12. Procédé de fabrication d'un agencement de brûleur suivant la revendication 9,
**caractérisé en ce que** l'on usine avec enlèvement de copeaux au moins en partie les diverses unités ( 30, 40, 50 ) modulaires pour former, notamment, au moins une saillie ( 32,42 ) et/ou un espace ( 33, 42 ) intermédiaire vide.

13. Procédé de fabrication d'un agencement de brûleur suivant la revendication 9,
**caractérisé en ce que** l'on donne, à la surface de section transversale déterminée à l'avance de la au moins une saillie ( 32, 42 ) de contact, une surface de contact minimisée de manière à ce que l'échange de chaleur entre les unités ( 30, 40, 50 ) modulaires jointes soit rendu minimum par cette surface de section transversale, de manière d'autre part à ce que la transmission de force entre les diverses unités ( 30, 40, 50 ) modulaires de l'agencement de brûleur atteigne une solidité suffisamment grande pour le fonctionnement de longue durée.
